# EUROPÄISCHE PATENTSCHRIFT

(11) **EP 0 776 842 B1**
(45) Veröffentlichungstag und Bekanntmachung des Hinweises auf die Patenterteilung: **20.01.1999**
(21) Anmeldenummer: 95118827.5
(22) Anmeldetag: 30.11.1995
(51) Int. Cl.: B65G 47/71

(54) **Verfahren und Vorrichtung zur Übergabe von gefüllten Teebeuteln von einer einbahnigen Teebeutelabpackmaschine auf eine zweibahnige Weiterverarbeitungsmaschine**
Method and apparatus for transferring filled tea bags from a single lane tea bag packaging machine to a double lane machine for further processing
Procédé et dispositif de transfert de sachets de thé remplis d'une machine d'emballage de sachets de thé à voie unique vers une machine de traitement ultérieur à double voie

(43) Veröffentlichungstag der Anmeldung: 04.06.1997
(73) Patentinhaber: TEEPACK SPEZIALMASCHINEN GMBH & CO. KG, D-40667 Meerbusch (DE)
(72) Erfinder: Nippes, Helmut, 42699 Solingen-Merscheid (DE); Funda, Friedhelm, 42389 Wuppertal (DE)
(74) Vertreter: Stenger, Watzke & Ring Patentanwälte

(56) Entgegenhaltungen:
- EP-A- 0 370 213
- DE-A- 3 942 708

## Beschreibung

Die Erfindung betrifft ein Verfahren und eine Vorrichtung zur Übergabe von gefüllten Teebeuteln, insbesondere Doppelkammerteebeuteln, von einer schnellaufenden einbahnigen Teebeutelabpackmaschine auf eine Weiterverarbeitungsmaschine, insbesondere zur Erstellung einer heißgesiegelten Umverpackung.

In einer bekannten Teebeutelabpackmaschine wird auf einer kontinuierlich durch die Maschine transportierten Filterpapierbahn mittels einer Tee-Dosiereinrichtung von einem Dosierrad in gleichen Portionsmengen abgegriffener Tee mittels eines Übertragungsrades abgelegt und wird anschließend aus der Filterpapierbahn ein Schlauch geformt, aus dem einzelne, gefüllte Doppelkammer-Teebeutel hergestellt werden. Die Maschine läuft außerordentlich schnell mit einer Taktzahl bis zu 400 Beute pro Minute. Üblicherweise werden die gefüllten Teebeutel einzeln mit Hilfe einer zangenförmigen Greifeinrichtung von der vorgeschalteten Teeverpackungsmaschine bekannter Bauart übernommen, einem Stapelschacht zur Ausbildung einer Verpackungsgruppe zugeführt und sodann aus dem Stapelschacht gruppenweise einer Verpackung in Schachteln zugeführt. Hierbei ist nachteilig, daß höchste Anforderungen an den Aromaerhalt des derart abgepackten Tees nicht erfüllt werden können, da ein absolut sicherer Aromaverschluß mit dieser Verpackung nicht gewährleistet ist. Die äußeren Bedingungen, wie Lufttemperatur und Luftfeuchte, können durch die Pappschachtel und das filterpapierartige Vliesmaterial hindurch auf den abgepackten Tee einwirken und dessen Qualität im Laufe der Zeit beeinträchtigen. Es besteht daher ein großes Bedürfnis, Teebeutel dicht gegen die Einwirkung von Luft, Licht und Feuchtigkeit sowie aromadicht zu verpacken. Hierzu ist es bekannt, jeden Beutel einzeln vorzugsweise in eine Aluminiumverbundfolienumhüllung einzubringen, die aus einem rechteckigen Materialstreifen besteht, der mittig um die halbe Längsseite einmal gefaltet ist und dessen drei ursprünglich offene Seiten durch Heißsiegeln nach dem Einbringen des Teebeutels dicht verschlossen werden. Dabei steht der Doppelkammerteebeutel in der Umverpackung mit seinem Boden auf der Faltkante auf. Die Faltkante kann aber auch gemäß DE-GM 295 14 249.9 parallel zu einer Längsseite des Aufgußbeutels ausgebildet sein, wobei der gefaltete Aluminiumzuschnitt entlang zweier kurzer Seiten und einer langen Seite verschlossen ist.

Der Erfindung liegt die **Aufgabe** zugrunde, ein einfaches Verfahren sowie eine Vorrichtung zur Durchführung dieses Verfahrens zur Übergabe von gefüllten Teebeuteln, insbesondere Doppelkammerteebeutel, von einer schnellaufenden einbahnigen Teebeutelabpackmaschine auf eine zweibahnige Weiterverarbeitungsmaschine zu entwickeln, insbesondere für die obengenannte Umverpackung.

Die Aufgabe ist an einem Verfahren der eingangs genannten Art erfindungsgemäß durch die kennzeichnenden Merkmale des Anspruchs 1 gelöst.

Vorzugsweise werden die Teebeutel in der ersten Verfahrensstufe auf dem Kopf stehend angeliefert und in der dritten Verfahrensstufe Kopf an Kopf zweibahnig zur Umverpackung weitertransportiert. Die Umverpackung wird gemäß einer zweckmäßigen Ausgestaltung der Erfindung in Form eines Dreiseitenbeutels durch Heißsiegeln erstellt, wobei der nichtversiegelte, gefalzte Beutelfuß auf jeder Bahn außen angeordnet ist. Auf diese Weise ist sichergestellt, daß jeder Beutelboden in der Umverpackung zur Falzseite hin gerichtet ist, so daß der Benutzer beim Öffnen der Heißsiegelung zwangsläufig den Teebeutelkopf mit dem dort befindlichen Etikett und Haltefaden zur Entnahme erfaßt.

Die erfindungsgemäße Vorrichtung ist gekennzeichnet durch eine Verschwenkeinrichtung mit einer Beutelaufnahme zur stehenden, insbesondere auf dem Kopf stehenden, Halterung eines Teebeutels an einem Schwenkarm und einen Schwenkantrieb für wechselweises Verschwenken des in der Beutelaufnahme befindlichen Beutels in im wesentlichen senkrechte Ebene verbleibend nach links bzw. rechts um 90°, durch je eine Kippeinrichtung in beiden Endpositionen der Verschwenkeinrichtung zum Verbringen der Teebeutel in eine waagerechte Lage sowie je einen Beutelvorschieber zum Verschieben der Teebeutel auf zwei parallel zueinander verlaufende Bahnen eines Transporttisches, der mit Transportmitteln zur Weiterführung der Teebeutel auf eine zweibahnige Weiterverarbeitungsmaschine, insbesondere zu einer Umverpackungsmaschine, versehen ist. Dabei findet die Übergabe der Teebeutel von der einbahnigen Teebeutelabpackmaschine in die Beutelaufnahme der Verschwenkeinrichtung vorteilhafterweise durch einen Beutelvorbringer statt, der die von einer zangenförmigen Greifeinrichtung auf dem Kopf stehend angelieferten gefüllten Teebeutel übernimmt und in einem aus einer Beutelauflage und Seitenführungen bestehenden Schacht in die Beutelaufnahme einschiebt.

Die Verschwenkeinrichtung besteht in einer bevorzugten Ausführungsform der Erfindung aus einem Führungskasten mit im wesentlichen halbkreisförmigem Innenraum, einer Beutelauflage und einem in diesem Führungskasten eine Teilkreisbewegung durchführenden Dreieckssegment an einer zentralen, vom Schwenkantrieb um 90° hin und herdrehbaren Achse, wobei das Dreieckssegment einen mittig auf einer Beutelauflage angeordneten Teebeutel seitlich erfaßt und mit der Verschwenkbewegung um 90° verschiebt und bei seiner Rückwärtsbewegung einen inzwischen in der Beutelaufnahme angeordneten weiteren Beute in die gegenüberliegende Position verbringt. Dabei ist der Schwenkantrieb zweckmäßigerweise an den Antrieb der Teebeutelabpackmaschine gekoppelt, um eine Koordination mit dem Maschinentakt in einfacher Weise herbeizuführen.

Für die weiteren Funktionen ist es erforderlich, die nach dem Verschwenken aufrecht in Seitenlage positionierten beiden Teebeutel in eine liegende Lage zu verbringen. Hierzu ist eine Kippeinrichtung vorgesehen, die gemäß dem bevorzugten Ausführungsbeispiel der Erfindung darin besteht, daß die unteren Teile des Führungskastens, in denen die Teebeutel in aufrechter Seitenlage ruhen, auf einer Kippachse gelagert sind und mittels eines Antriebs in Transportrichtung in eine flachliegende Position kippbar sind, wobei der Kippantrieb wiederum an den Maschinenantrieb zur Taktkoordination angeschlossen ist. Zweckmäßigerweise sind in den kippbaren Teilen des Führungskastens je ein Fenster ausgespart, durch die je ein Schubarm des Beutelvorschiebers auf den Teebeutel einwirken kann, um diesen taktweise auf die davor angeordnete, im wesentlichen waagerecht verlaufende Bahn eines Transporttisches zu schieben, der mit Transportmitteln zur Weiterführung der Teebeutel versehen ist.

Weitere Einzelheiten, Merkmale und Vorteile des Gegenstandes der Erfindung ergeben sich aus der nachfolgenden Beschreibung der zugehörigen Zeichnung, in der eine erfindungsgemäße Übergabevorrichtung in verschiedenen Ansichten schematisch dargestellt ist. In der Zeichnung zeigt:
- Fig. 1: eine Seitenansicht gemäß Linie A-A der Fig. 2 eines Beutelvorbringers und einer Verschwenkeinrichtung,
- Fig. 2: eine Vorderansicht auf den Beutelvorbringer, die Verschwenkeinrichtung und eine Kippeinrichtung,
- Fig. 3: eine Draufsicht der Vorrichtung der Fig. 2 und
- Fig. 4: einen Schnitt gemäß B-B der Fig. 2 zur Verdeutlichung einer Beutelvorschubeinrichtung.

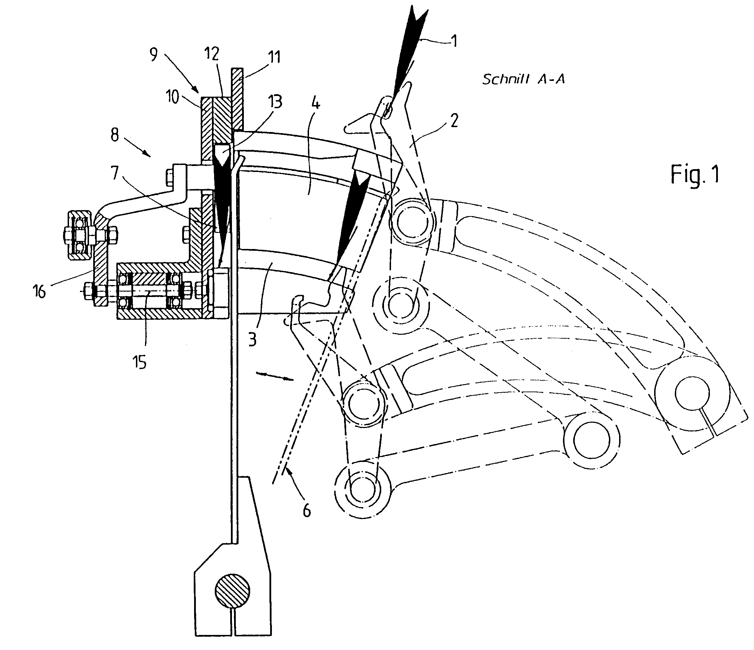

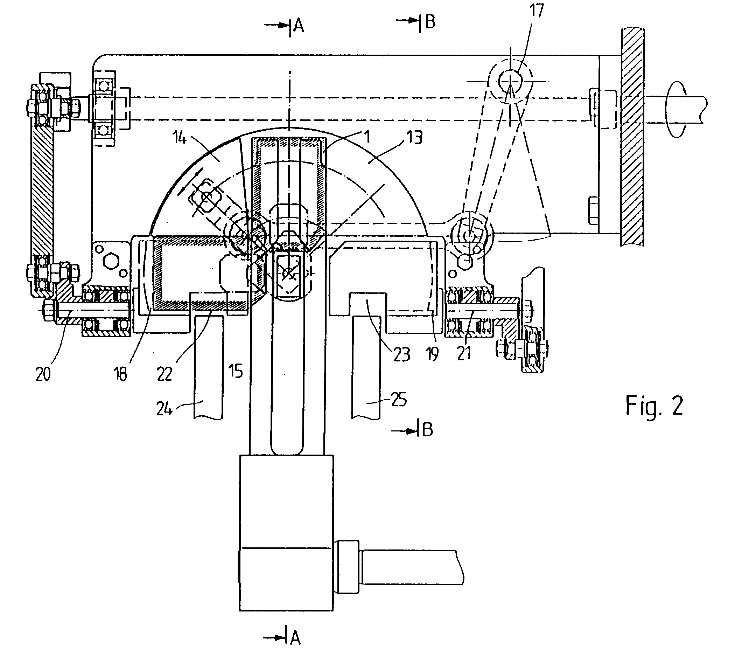

Fig. 1 der Zeichnung verdeutlicht in einer Seiten-Schnittansicht, die der Linie A-A der Fig. 2 entspricht, die Übergabe von gefüllten Doppelkammerteebeuteln 1 von einer nicht dargestellten schnellaufenden einbahnigen Teebeutelabpackmaschine mit einer Taktzahl von bis zu 400 Beute pro Minute in eine Vorrichtung, die dem Zweck dient, eine zweibahnige Weiterverarbeitung in einer Folienumverpackungsmaschine, die ebenfalls nicht dargestellt ist, zu ermöglichen. Zu diesem Zweck werden die gefüllten Doppelkammerteebeutel 1 auf dem Kopf stehend einzeln mit Hilfe einer zangenförmigen Greifeinrichtung 2 von der vorgeschalteten Teeverpackungsmaschine übernommen, in einem oben offenen aus einer Beutelauflage 3 und Seitenführungen 4, 5 bestehenden Schacht abgesetzt und mittels eines in den Schacht eingreifenden Beutelvorbringers 6 in eine Beutelaufnahme 7 einer Verschwenkeinrichtung 8 eingeschoben. Der Beutelvorbringer 6 bewegt sich dabei von der in Fig. 1 der Zeichnung gestrichelt dargestellten äußeren Position am Schacht bis zur durchgezogenen Endposition und ist mit dem Maschinenantrieb zur Taktkoordination gekoppelt. In der Endposition schließt der Beutelvorbringer die Beutelaufnahme 7 für die Durchführung einer störungsfreien Verschwenkbewegung und kehrt sodann zur Neubefüllung in seine Ausgangsposition (gestrichelt) zurück.

Die Verschwenkeinrichtung 8 besteht aus einem Führungskasten 9, gebildet aus einem vorderen Führungsblech 10, einem hinteren Führungsblech 11, die im Abstand zueinander angeordnet sind, und einem Abschlußblech 12, die einen im wesentlichen halbkreisförmigen Innenraum 13 für die Aufnahme und die Bewegung der Doppelkammerteebeutel 1 bilden. An dem Führungskasten 9 ist der bereits beschriebene Schacht des Beutelvorbringers 6 mit der Beutelauflage 3 befestigt.

In den halbkreisförmigen Innenraum 13 des Führungskasten 9 der Verschwenkeinrichtung 8 ist ein Dreieckssegment 14 eingesetzt, das gemäß Doppelpfeil um 90° verschwenkbar ist. Zu diesem Zweck ist am Führungskasten 9 eine Schwenkachse 15 gelagert, die einen Schwenkarm 16 trägt, der als Halterung für das Segment 14 dient, wie insbesondere Fig. 1 der Zeichnung entnehmbar ist. Mit dem Schwenkarm ist ein Antrieb 17 gekuppelt, der an den Antrieb der Teebeutelabpackmaschine angeschlossen ist, um eine Koordination mit dem Maschinentakt in einfacher Weise herbeizuführen.

Nachdem gemäß Fig. 1 der Zeichnung ein gefüllter Doppelkammerteebeutel auf dem Kopf stehend in im wesentlichen senkrechter Position in die Beutelaufnahme 7 eingeführt worden ist, wird das beispielsweise in der Position gemäß Fig. 2 der Zeichnung stehende Segment 14 vom Schwenkantrieb 17 nach rechts um seine Schwenkachse 15 bewegt und verschiebt dabei den mittig angeordneten Beute nach rechts in eine aufrechte Seitenlage, in der der Beutel mit seiner unteren Längskante im unteren Teil des Führungskastens 9 aufliegt. Nach der Befüllung der Beutelaufnahme 7 mit einem nächsten Teebeutel wird das Segment 14 nach links verschwenkt und nimmt dabei den nächsten Beutel mit und legt ihn in eine entsprechende Seitenlage gemäß Fig. 2 der Zeichnung links im unteren Teil des Führungskastens 9 ab. Dieser Bewegungszyklus wiederholt sich im Takt der Teebeutelabpackmaschine und stellt den Übergang von einer einbahnigen Verarbeitungsweise auf eine zweibahnige Weiterverarbeitung dar.

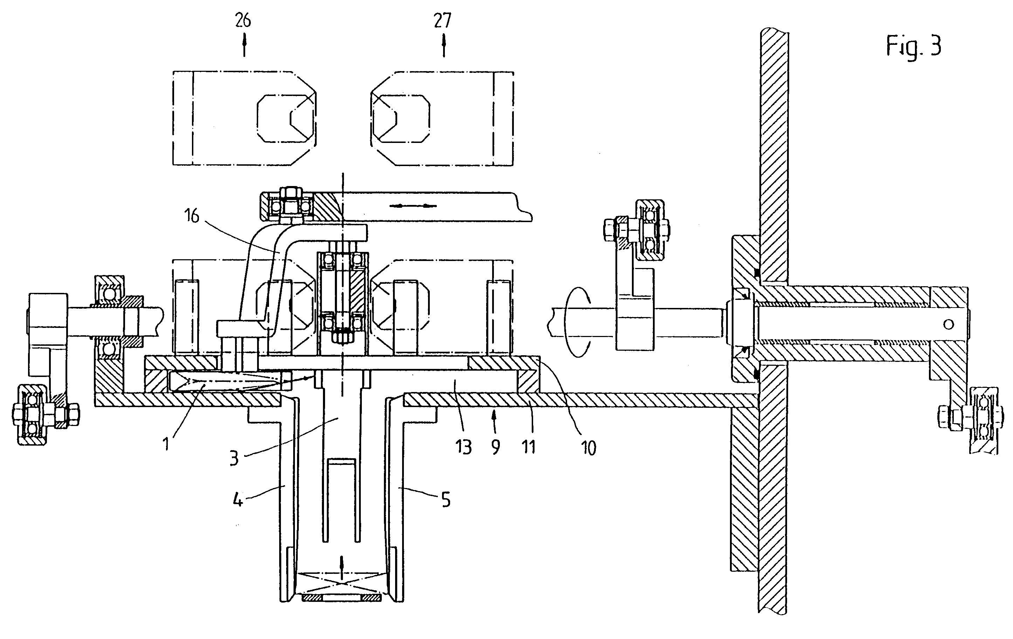

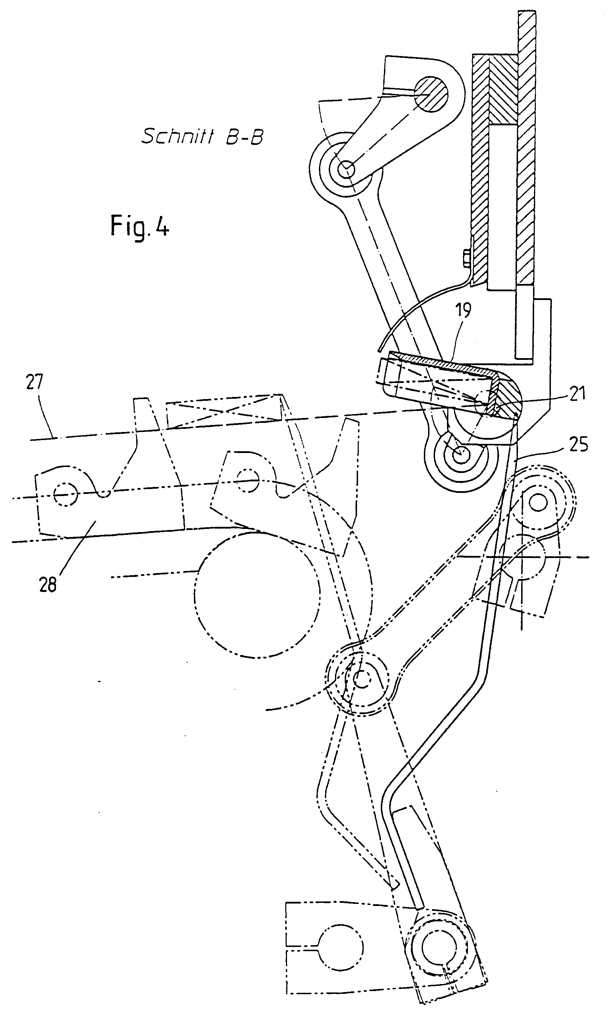

In der nächsten Verfahrensstufe müssen nun die in aufrechter Seitenlage befindlichen Doppelkammerteebeutel in eine liegende Position verbracht werden, um auf einer einfachen Transportunterlage, beispielsweise einem Band oder einem Transporttisch lagesicher weiter förderbar zu sein. Zu diesem Zweck sind die linksseitigen und rechtsseitigen unteren Teile 18, 19 des Kastens 9 im Querschnitt L-förmig mit offener Vorderseite ausgebildet und um eine Kippachse 20 bzw. 21 in die in Fig. 4 der Zeichnung dargestellte Position kippbar gelagert. Die unteren Teile 18 und 19 des Führungskastens 9 weisen dabei je ein Fenster 22, 23 auf, durch welches von hinten ein Beutelvorschieber 24 bzw. 25 den dort befindlichen Doppelkammerteebeutel erfassen kann und im Vollzug einer in Fig. 4 der Zeichnung gestrichelt dargestellten Verschwenkbewegung aus dem Führungskasten 9 auf eine Auflagebahn 26 bzw. 27 in im wesentlichen waagerechter Position liegend verbringen kann. Dabei nehmen die Doppelkammerteebeutel 1 auf den beiden Bahnen 26 und 27 eine der Weiterverarbeitung dienliche Position Kopf gegen Kopf ein und weisen ihre Bodenbereiche jeweils nach außen, wie Fig. 3 der Zeichnung entnehmbar ist.

Auch die Beutelvorschieber 24, 25 sind an den Maschinenantrieb gekoppelt und in ihrer Bewegung taktmäßig abgestimmt. Für den Weitertransport der auf den beiden Bahnen 26 und 27 befindlichen Doppelkammerteebeutel sorgt eine mit Kettenhaken 28 versehene Transporteinrichtung der weiterführenden Maschine.

In der sich anschließenden, nicht dargestellten Maschine werden nun die Teebeutel mit Folienumverpackung in zweibahniger Verarbeitung bei halber Taktzahl im Vergleich zur Teebeutelabpackmaschine versehen.

### Bezugszeichenliste

- 1: Doppelkammerteebeutel
- 2: Greifeinrichtung
- 3: Beutelauflage
- 4: Seitenführung
- 5: Seitenführung
- 6: Beutelvorbringer
- 7: Beutelaufnahme
- 8: Verschwenkeinrichtung
- 9: Führungskasten
- 10: vorderes Führungsblech
- 11: hinteres Führungsblech
- 12: Abschlußblech
- 13: Innenraum
- 14: Dreieckssegment
- 15: Schwenkachse
- 16: Schwenkarm
- 17: Antrieb
- 18: verkippbarer Kastenteil
- 19: verkippbarer Kastenteil
- 20: Kippachse
- 21: Kippachse
- 22: Fenster
- 23: Fenster
- 24: Beutelvorschieber
- 25: Beutelvorschieber
- 26: Auflagebahn
- 27: Auflagebahn
- 28: Kettenkasten

## Patentansprüche

1. Verfahren zur Übergabe von gefüllten Teebeuteln, insbesondere Doppelkammerteebeuteln, von einer schnellaufenden einbahnigen Teebeutelabpackmaschine auf eine Weiterverarbeitungsmaschine, insbesondere zur Erstellung einer heißgesiegelten Umverpackung,
**dadurch gekennzeichnet,**
daß in einer ersten Verfahrensstufe senkrecht stehend angelieferte Teebeutel nacheinander erfaßt und in im wesentlichen senkrechter Ebene verbleibend abwechselnd um 90° nach links und rechts verschwenkt werden, dann in einer zweiten Verfahrensstufe die verschwenkten Teebeutel in eine liegende Position gekippt und auf einem zweibahnigen Transporttisch abgelegt werden und dort in einer dritten Verfahrensstufe weitertransportiert und auf eine zweibahnige Weiterverarbeitungsmaschine übergeben werden.

2. Verfahren nach Anspruch 1, dadurch gekennzeichnet, daß die Teebeutel in der ersten Verfahrensstufe auf dem Kopf stehend angeliefert werden und in der dritten Verfahrensstufe Kopf an Kopf zweibahnig zur Umverpackung weitertransportiert werden.

3. Verfahren nach Anspruch 1 oder 2, dadurch gekennzeichnet, daß die Umverpackung in Form eines Dreiseitenbeutels durch Heißsiegeln erstellt wird, wobei der nicht gesiegelte, gefalzte Beutelfuß auf jeder Bahn außen angeordnet ist.

4. Vorrichtung zur Übergabe von gefüllten Teebeuteln, insbesondere Doppelkammerteebeuteln, von einer schnellaufenden einbahnigen Teebeutelabpackmaschine auf eine Weiterverarbeitungsmaschine, insbesondere zur Erstellung einer heißgesiegelten Umverpackung, gekennzeichnet durch eine Verschwenkeinrichtung (8) mit einer Beutelaufnahme (7) zur stehenden, insbesondere auf dem Kopf stehenden, Halterung eines Teebeutels (1) an einem Schwenkarm (16) und einen Schwenkantrieb (17) für wechselweises Verschwenken des in der Beutelaufnahme (7) befindlichen Teebeutels (1 ) in im wesentlichen senkrechter Ebene verbleibend nach links bzw. rechts um 90°, durch eine Kippeinrichtung in beiden Endpositionen der Verschwenkeinrichtung (8) zum Verbringen der Teebeutel (1) in eine liegende Lage sowie je einen Beutelvorschieber (24, 25) zum Verschieben der Teebeutel (1) auf zwei parallel zueinander verlaufende Bahnen (26, 27) eines Transporttisches, der mit Transportmitteln (28) zur Weiterführung der Teebeutel (1) auf eine zweibahnige Weiterverarbeitungsmaschine, insbesondere zu einer Umverpackungsmaschine, versehen ist.

5. Vorrichtung nach Anspruch 4, gekennzeichnet durch einen der Beutelaufnahme (7) vorgeschalteten Beutelvorbringer (6) zur Übergabe der Teebeutel (1) von der einbahnigen Teebeutelabpackmaschine in die Beutelaufnahme (7) der Verschwenkeinrichtung (8).

6. Vorrichtung nach Anspruch 5, dadurch gekennzeichnet, daß der Beutelvorbringer (6) aus einer schachtartigen, oben offenen Beutelauflage (3) mit Seitenführungen (4, 5) und einem verschwenkbaren Schieber besteht.

7. Vorrichtung nach einem der Ansprüche 4 bis 6, dadurch gekennzeichnet, daß die Verschwenkeinrichtung (8) aus einem Führungskasten (9) mit im wesentlichen halbkreisförmigem Innenraum (13) besteht, in dem ein eine Teilkreisbewegung durchführendes Dreieckssegment (14) an einer zentralen, vom Schwenkantrieb um 90° hin- und herdrehbaren Achse (15) angeordnet ist, wobei das Dreieckssegment (14) einen mittig auf der Beutelauflage (3) angeordneten Teebeutel (1) seitlich erfaßt und mit der Verschwenkbewegung um 90° verschiebt und das Dreieckssegment (14) bei seiner Rückwärtsbewegung einen inzwischen in der Beutelaufnahme (7) angeordneten weiteren Beutel in die gegenüberliegende Position verbringt.

8. Vorrichtung nach einem der Ansprüche 4 bis 7, dadurch gekennzeichnet, daß der Schwenkantrieb (17) mit dem Antrieb der Teebeutelabpackmaschine zur Taktkoordination gekoppelt ist.

9. Vorrichtung nach einem der Ansprüche 4 bis 8, dadurch gekennzeichnet, daß zur Ausbildung der Kippeinrichtung die unteren Teile des Führungskastens (9), in denen die Teebeutel (1) in aufrechter Seitenlage ruhen, auf einer Kippachse (20, 21) gelagert sind und mittels eines Antriebs in Transportrichtung in eine liegende Position kippbar sind, wobei der Kippantrieb an den Maschinenantrieb zur Taktkoordination angeschlossen ist.

10. Vorrichtung nach Anspruch 9, dadurch gekennzeichnet, daß in den kippbaren Teilen (18, 19) des Führungskastens (9) je ein Fenster (22, 23) ausgespart ist, durch die je ein Schubarm (24, 25) des Beutelvorschiebers auf den jeweiligen Teebeutel einwirkt.

11. Vorrichtung nach einem der Ansprüche 4 bis 10, gekennzeichnet durch einen zweibahnigen im wesentlichen waagerecht verlaufenden Weitertransport auf Auflagebahnen (26, 27) für die Teebeutel mit Kettenhaken (28) als Transportmittel.

## Claims

1. Method for the transfer of filled tea bags, in particular double-chamber tea bags, from a high-speed single-track tea bag packing machine to a further processing machine, in particular to produce a heat-sealed surrounding package, characterised in that, in a first step of the method, vertically supplied tea bags are picked up successively and pivoted to left and right through 90° alternately, remaining in an essentially vertical plane, then in a second step the pivoted tea bags are tipped into a horizontal position and deposited on a two-track transport table and there further transported in a third step and transferred to a two-track further processing machine.

2. Method according to claim 1, characterised in that the tea bags in the first step are supplied upside down and in the third step further transported side by side on two tracks to the surrounding package.

3. Method according to claim 1 or 2, characterised in that the surrounding package in the form of a three-sided bag is produced by heat sealing, wherein the unsealed folded base of the bag is arranged on each track on the outside.

4. Apparatus for the transfer of filled tea bags, in particular double-chamber tea bags, from a high-speed single-track tea bag packing machine to a further processing machine, in particular to produce a heat-sealed surrounding package, characterised by a pivot device (8) with a bag receptacle (7) for vertical, in particular upside-down, support of a tea bag (1) on a pivot arm (16), and a pivot drive (17) for alternately pivoting the tea bag (1) located in the bag receptacle (7) to left or right through 90°, remaining in an essentially vertical plane, by a tipping device in both end positions of the pivot device (8) for bringing the tea bags (1) into a horizontal position as well as a bag advancer (24, 25) each for sliding the tea bags (1) on two parallel tracks (26, 27) of a transport table which is provided with transport means (28) for forwarding the tea bags (1) to a two-track further processing machine, in particular to a surround-packaging machine.

5. Apparatus according to claim 4, characterised by a bag advancer (6) mounted in front of the bag receptacle (7) for transferring the tea bags (1) from the single-track tea bag packing machine to the bag receptacle (7) of the pivot device (8).

6. Apparatus according to claim 5, characterised in that the bag advancer (6) consists of a shaft-like open-topped bag support (3) with lateral guides (4, 5) and a pivotable slider.

7. Apparatus according to any of claims 4 to 6, characterised in that the pivot device (8) consists of a guide box (9) with essentially semi-circular interior (13) in which a triangle segment (14) which performs a partially circular movement is arranged on a central shaft (15) which can be rotated to and fro through 90° by the pivot drive, wherein the triangle segment (14) laterally picks up a tea bag (1) arranged centrally on the bag support (3) and displaces it through 90° with the pivot movement, and during its rearward movement the triangle segment (14) brings another bag which in the meantime is arranged in the bag receptacle (7) into the opposite position.

8. Apparatus according to any of claims 4 to 7, characterised in that the pivot drive (17) is coupled to the drive of the tea bag packing machine for timing coordination.

9. Apparatus according to any of claims 4 to 8, characterised in that, to form the tipping device, the lower portions of the guide box (9) in which the tea bags (1) rest in a vertical side position are mounted on a tilt shaft (20, 21) and can be tipped into a horizontal position by means of a drive in the direction of transport, wherein the tipping drive is connected to the machine drive for timing coordination.

10. Apparatus according to claim 9, characterised in that in each of the tiltable portions (18, 19) of the guide box (9) is formed an aperture (22, 23) through which a thrust arm (24 ,25) of the bag advancer acts on the respective tea bag.

11. Apparatus according to any of claims 4 to 10, characterised by two-track essentially horizontally extending further transport on supporting tracks (26, 27) for the tea bags with chain hooks (28) as the transport means.

## Revendications

1. Procédé de transfert de sachets de thé remplis, en particulier de sachets de thé à chambre double, d'une machine d'empaquetage de sachet de thé à une voie, à cadence rapide, à une machine de traitement ultérieur en particulier pour constituer un emballage d'enrobage scellé à chaud,
caractérisé en ce que,
dans une première étape du procédé, des sachets à thé fournis debout verticalement sont saisis les uns après les autres et, en restant dans un plan sensiblement vertical, sont alternativement pivotés de 90 degrés vers la gauche et vers la droite, puis, dans une deuxième étape de procédé, les sachets de thé pivotés sont baculés dans une position horizontale et déposés sur une table de transport à deux voies et à cet endroit, dans une troisième étape de procédé, sont soumis à un transport ultérieur, en étant transférés à une machine de traitement ultérieur à deux voies.

2. Procédé selon la revendication 1, caractérisé en ce que les sachets de thé sont fournis dans la première étape de procédé en étant placés sur la tête, et dans la troisième étape de procédé sont soumis à un transport ultérieur, tête contre tête, sur deux voies, pour l'emballage d'enrobage.

3. Procédé selon la revendication 1 ou 2, caractérisé en ce que l'emballage d'enrobage est constitué sous la forme d'un sachet à trois côtés, par scellage à chaud, le pied de sachet plié, non-scellé étant disposé extérieurement sur chaque voie.

4. Dispositif de transfert de sachets de thé remplis, en particulier de sachets à chambre double, d'une machine d'empaquetage de sachets de thé à une voie, à cadence rapide, à une machine de traitement ultérieur, en particulier pour constituer un emballage d'enrobage scellé à chaud, caractérisé par un dispositif de pivotement (8) équipé d'un logement à sachets (7) pour assurer la fixation debout, en particulier placé debout sur la tête, d'un sachet de thé (1) sur un bras pivotant (16), et par un entraînement de pivotement (17) pour le pivotement alterné du sachet de thé (1) se trouvant dans le logement de sachets (7) en restant dans un plan sensiblement vertical, vers la gauche, respectivement vers la droite, de 90 degrés, au moyen d'un dispositif de basculement, dans deux positions finales du dispositif de pivotement (8) pour placer les sachets de thé (1) dans une position allongée, ainsi que chaque fois par un éjecteur à sachets (24, 25) destiné à placer les sachets de thé (1) sur deux voies (26, 27), s'étendant parallèlement l'une à l'autre, d'une table de transport, équipée de moyens de transport (28) pour le transport ultérieur des sachets de thé (1) à une machine de transformation ultérieure à deux voies, en particulier une machine d'emballage d'enrobage.

5. Dispositif selon la revendication 4, caractérisé par un organe de placement de sachets (6) mis en circuit en amont du logement à sachets (7) pour transférer les sachets de thé de la machine d'empaquetage de sachets de thé à une voie au logement à sachet (7) du dispositif de pivotement (8).

6. Dispositif selon la revendication 5, caractérisé en ce que l'organe de placement de sachets (6) est constitué d'un support à sachets (3) ouvert en partie haute, du genre d'un puits, doté de guidages latéraux (4, 5) et d'un coulisseau susceptibles de pivoter.

7. Dispositif selon l'une des revendications 4 à 6, caractérisé en ce que le dispositif de pivotement (8) est constitué d'un caisson de guidage (9) avec un espace intérieur (13) sensiblement en forme de demi-cercle, dans lequel un segment de triangle (14), effectuant un déplacement en cercle partiel, est disposé sur un axe central (15) susceptible de tourner dans un sens et dans l'autre, d'une valeur de 90 degrés, sous l'action de l'entraînement de pivotement, le segment de triangle (14) saisissant latéralement un sachet de thé (1) disposé centralement sur le support de sachets (3) et le déplaçant d'un angle de 90 degrés à l'aide du dispositif du pivotement, et le segment de triangle (14) lors de son déplacement de rappel, plaçant un autre sachet, disposé entre-temps dans le logement à sachets (7), dans la position opposée.

8. Dispositif selon l'une des revendications 4 à 7, caractérisé en ce que l'entraînement de pivotement (17) est couplé à l'entraînement de la machine d'empaquetage de sachets de thé, dans le but d'obtenir une coordination de rythme.

9. Dispositif selon l'une des revendications 4 à 8, caractérisé en ce que, pour constituer le dispositif de basculement, les parties inférieures du caisson de guidage (9), dans lesquelles les sachets de thé (1) reposent en position latérale dressée, sont montées sur un axe de basculement (20, 21) et sont susceptibles de basculer au moyen d'un entraînement, dans la direction de transport, en une position allongée, entraînement de basculement étant raccordé à l'entraînement de la machine, dans le but de coordonner le rythme.

10. Dispositif selon la revendication 9, caractérisé en ce que, dans chacune des parties (18, 19) basculantes du caisson de guidage (9) est ménagée une fenêtre (22, 23), à travers laquelle un bras de poussée (24, 25) de l'organe de placement de sachets agit sur le sachet de thé respectif.

11. Dispositif selon l'une des revendications 2 à 4, caractérisé par un transport ultérieur, se faisant sensiblement horizontalement, sur deux voies, sur des voies de dépose (26, 27) destinées aux sachets de thé, avec des crochets à chaînes (28) faisant office de moyens de transport.
